# EUROPEAN PATENT APPLICATION

(11) **EP 4 653 253 A1**
(43) Date of publication of application: **26.11.2025**
(21) Application number: 25177034.3
(22) Date of filing: 16.05.2025
(51) Int. Cl.: B60N 2/58, B60N 2/64, B60N 2/80

(54) **SEAT FOR A MOTOR VEHICLE AND MOTOR VEHICLE COMPRISING THE SAME**

(30) Priority: 20.05.2024 IT 202400011362
(71) Applicant: FERRARI S.p.A., 41100 Modena (IT)
(72) Inventor: DUSINI, Luca, 41100 MODENA (IT)
(74) Representative: Studio Torta S.p.A.

(57) **Abstract**

Seat (10) comprising a cushioning (20) and an external covering (30), which covers the cushioning (20). Said cushioning (20) comprises, in turn, a skeleton (21) made of a shape memory material and a filler (22), within which the skeleton (21) is at least partially embedded.

## Description

### CROSS-REFERENCE TO RELATED APPLICATIONS

This patent application claims priority from Italian patent application no. 102024000011362 filed on May 20, 2024, the entire disclosure of which is incorporated herein by reference.

### TECHNICAL FIELD

The present invention relates to an improved seat, in particular for automotive applications. The present invention also relates to a motor vehicle comprising said improved seat.

### BACKGROUND

Motor vehicles are known, which comprise seats for the driver and/or possible passengers. Said seats generally comprise:
- a cushioning made of a foam, for example polyurethane foam; and
- an external covering, for example made of leather, which encloses the cushioning.

It has been observed that seats are subjected to repeated stresses when the occupants of the motor vehicle sit on them and when they stand up, alternately compressing and stretching the external covering. These repeated stresses tend to permanently deform the cushioning, resulting in the generation, over time, of wrinkles and other aesthetic defects on the external covering, which affect the overall quality of the seat.

Owing to the above, there is a need to obtain a seat that is less easily subjected to the generation of wrinkles than known seats.

An object of the invention is to fulfil the need discussed above, preferably in a simple and reliable fashion.

### DESCRIPTION OF THE INVENTION

The object is reached by a seat for a motor vehicle as defined in claim 1. The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- Figure 1 is a perspective view of a seat according to the invention;
- Figure 2 is a perspective view of a portion of the seat of Figure 1 isolated from the rest of the seat for reasons of clarity;
- Figure 3 shows the portion of the seat shown in Figure 2, from which an external covering was removed; and
- Figure 4 is a partial sectional view, on a much larger scale, of the portion of the seat shown in Figure 2.

### EMBODIMENTS OF THE INVENTION

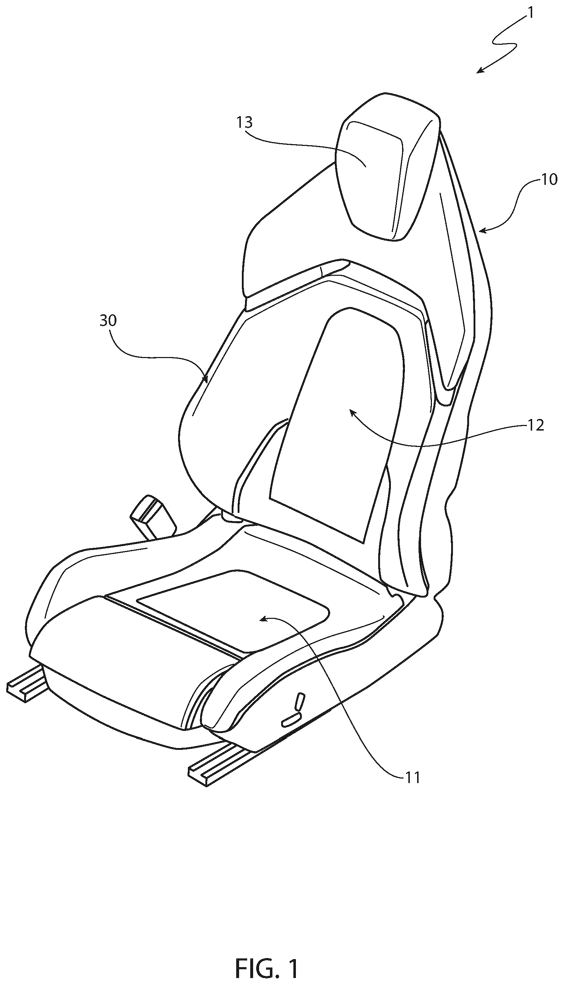

In figure 1, reference number 1 is used to indicate, as a whole, a motor vehicle comprising a seat 10. The seat 10 is adapted to support a driver or a passenger of the motor vehicle 1 and essentially comprises:
- a seat cushion 11, which extends horizontally or substantially horizontally with respect to the ground on which the motor vehicle 1 stands;
- a backrest 12 extending from the seat 11 in a vertical or substantially vertical manner; and
- a headrest 13 arranged on the side of the backrest 12 facing away from the seat cushion 11.

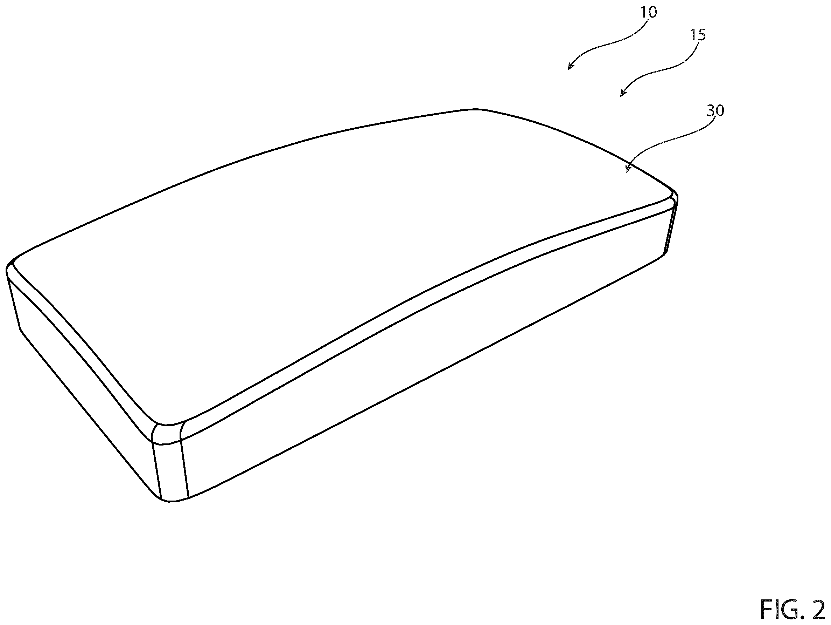

Figure 2 shows a portion 15 of the seat 10. This portion 15 is, for example, included in the seat 11, in the backrest 12 and/or in the headrest 13. Specifically, the seat 10 comprises one single portion 15 or a plurality of portions 15.

By way of example, the portion 15 shown in Figure 2 has a parallelepiped-like or substantially parallelepiped-like shape.

The portion 15 comprises a cushioning 20 and an external covering 30, which covers the cushioning 20 and is adapted to come in direct contact with the user. In particular, the external covering 30 covers the entire cushioning 20 completely and/or so that it is not visible from the outside.

By way of example, the external covering 30 is made of leather or a synthetic material.

The cushioning 20 advantageously comprises:
- a skeleton 21 made of a shape memory material; and
- a filler 22, within which the skeleton 21 is at least partially embedded.

In detail, the material of the skeleton 21 is a shape memory polymer or a shape memory metal alloy. In addition, the material of the skeleton 21, due to the fact that it is of the shape memory type, is superelastic.

Furthermore, since the skeleton 21 is covered by the external covering 30, it can be understood as an endoskeleton of the seat 10.

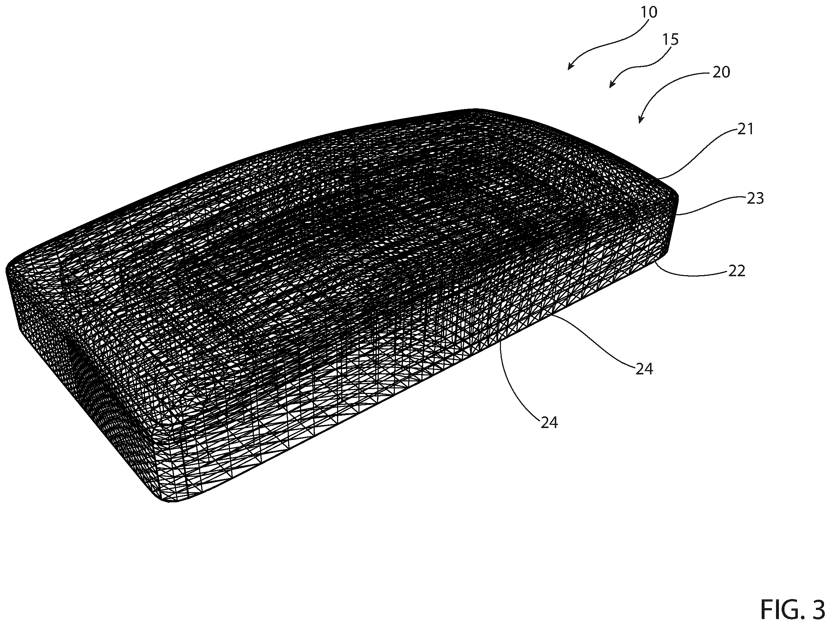

As shown in Figure 3, the skeleton 21 comprises a reticular structure 23 comprising repeated unit cells 25, 26, each comprising structural elements 24. In the embodiment shown herein, the structural elements 24 are beam-like elements, for example, rods.

Preferably, the reticular structure 23 is a three-dimensional triangular mesh, for example defined by means of a Delaunay triangulation algorithm.

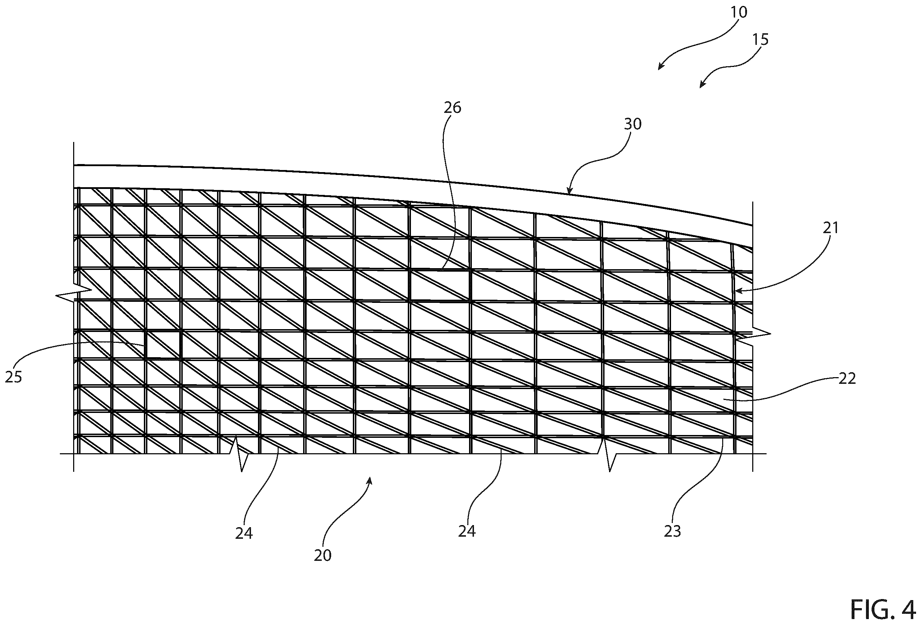

In addition, the reticular structure 23 preferably comprises unit cells 25, 26 repeated, different from one another, in different regions of the cushioning 20. In detail, as shown in Figure 4, the reticular structure 23 comprises at least:
- a unit cell 25 of a first type, which comprises first structural elements 24 having first dimensions and arranged at first distances from one another;
- at least one unit cell 26 of a second type, which comprises second structural elements 24 having second dimensions and arranged at second distances from one another.

In detail, the second dimensions are different from the first dimensions and/or the second distances are different from the first distances. More in detail, by dimensions of the structural elements 24 is meant the diameter or the length of the structural elements 24.

The reticular structure 23 is manufactured by means of *additive manufacturing,* for example by means of FDM (Fused Deposition Modelling) or stereolithography.

Furthermore, the filler 22 comprises an elastomer material. In particular, the filler 22 comprises a foam, for example polyurethane foam.

Specifically, the filler 22 is arranged at the space interposed between the structural elements 24 of the reticular structure 23.

Preferably, the seat 10 comprises, in a known manner, a frame, in the area of which it is operatively connected to the rest of the motor vehicle 1.

The method for manufacturing the seat 10 will be described below. Said manufacturing method comprises the steps of:
i) manufacturing a skeleton 21 from a shape memory material, for example by means of *additive manufacturing;*
ii) at least partially embedding the skeleton 21 in a filler 22 so as to form the cushioning 20;
iii) covering the cushioning 20 with the external covering 30.

In particular, step ii) can be carried out by means of a process of co-molding or injecting a foam into the volume or around the volume defined by the skeleton 21.

Step i), in turn, comprises in detail the step iv) of manufacturing a reticular structure 23 provided with repeated unit cells 25, 26; the unit cells 25, 26 comprising structural elements 24.

In further detail, step iv) comprises the manufacturing of the reticular structure 23 comprising:
- at least a unit cell of a first type 25, which comprises first structural elements 24 having first dimensions and being arranged at first distances to one another;
- at least a unit cell of a second type 26, which comprises second structural elements 24 having second dimensions and being arranged at second distances to one another;
   wherein the second dimensions are different from the first dimensions and/or wherein the second distances are different from the first distances.

The operation of the seat 10 will be described below.

In use, the seat 10 inside the motor vehicle 1 acts as a support for the driver or a passenger.

In particular, when the user is seated on the seat 10, the cushioning 20 supports the user and deforms; when the user stands up from the seat 10, the cushioning 20 is such as to recover the shape it had before the user sat down, thus limiting the generation of wrinkles on the external covering 30.

Owing to the above, the advantages of the seat 10 and of the motor vehicle 1 according to the invention are evident.

Since the cushioning 20 comprises the skeleton 21, which is made of a shape memory material and is embedded in the filler 22, the seat 10 and, in particular, the external covering 30 are less easily subjected to the generation of wrinkles compared to known seats discussed in the introduction to this description. This is possible thanks to the fact that the structural characteristics of the filler 22 are significantly improved by the skeleton 21, which makes the cushioning 20 able to withstand the repeated stresses to which the seats of motor vehicles are generally subjected.

Moreover, thanks to the characteristics of shape memory materials, the seat 10 also is particularly efficient in resisting thermal stresses or humidity.

Since the reticular structure 23 can comprise unit cells 25, 26 of different types, it is possible to obtain particular desired structural behaviours in different regions of the seat 10.

Finally, the seat 10 and the motor vehicle 1 according to the invention can be subjected to changes and variants, which, though, do not go beyond the scope of protection set forth in the appended claims.

The geometry of the seat 10 could be varied with great freedom, to adapt, for example, to aesthetic needs and/or ergonomic requirements.

The seat 10 could not be part of a motor vehicle 1, but could be included in another type of vehicle (for example, a boat) or in a stationary device (for example, a gaming station or a simulator).

The motor vehicle 1 could comprise a plurality of seats 10. In particular, for example, the motor vehicle 1 could comprise a seat 10 for the driver and one or more seats 10 for the passengers. The motor vehicle 1 could also comprise a seat 10 adapted to support more than one passenger of the motor vehicle 1 at the same time.

The unit cells 25, 26 that make up the reticular structure 23 could have a geometry other than the one shown herein. For example, the unit cells 25, 26 could have a gyroid or honeycomb structure.

## Claims

1. Seat (10) comprising:
- a cushioning (20); and
- an external covering (30), which covers said cushioning (20);
**characterized in that** said cushioning (20) comprises:
- a skeleton (21) in a shape memory material; and
- a filler (22), within which said skeleton (21) is at least partially embedded.

2. Seat according to claim 1, wherein said material is superelastic.

3. Seat according to claim 1 or 2, wherein said material comprises a shape memory polymer or a shape memory metal alloy.

4. Seat according to any one of the preceding claims, wherein said skeleton (21) comprises a reticular structure (23) comprising repeated unit cells (25, 26); said unit cells (25, 26) comprising structural elements (24).

5. Seat according to claim 4, wherein said reticular structure (23) comprises:
- at least a unit cell of a first type (25) comprising first structural elements (24); said first structural elements (24) having first dimensions and being arranged at first distances to one another;
- at least a unit cell of a second type (26) comprising second structural elements (24); said second structural elements (24) having second dimensions and being arranged at second distances to one another;
wherein said second dimensions are different from said first dimensions and/or wherein said second distances are different from said first distances.

6. Seat according to claim 4 or 5, wherein said reticular structure (23) is made by additive manufacturing.

7. Seat according to any one of the preceding claims, wherein said filler (22) comprises a foam.

8. Vehicle (1) comprising at least a seat (10) according to any one of the preceding claims.

9. Method for manufacturing a seat (10) comprising the steps of:
i) manufacturing a skeleton (21) in a shape memory material;
ii) embedding at least partially said skeleton (21) in a filler (22) so as to form a cushioning (20);
iii) covering said cushioning (20) with an external covering (30).

10. Method according to claim 9, wherein said step i) of manufacturing said skeleton (21) comprises a step iv) of manufacturing a reticular structure (23) comprising repeated unit cells (25, 26); said unit cells (25, 26) comprising structural elements (24).

11. Method according to claim 10, wherein said step iv) comprises manufacturing said reticular structure (23) in such a way that it comprises:
- at least a unit cell of a first type (25) comprising first structural elements (24); said first structural elements (24) having first dimensions and being arranged at first distances to one another;
- at least a unit cell of a second type (26) comprising second structural elements (24); said second structural elements (24) having second dimensions and being arranged at second distances to one another;
wherein said second dimensions are different from said first dimensions and/or wherein said second distances are different from said first distances.

12. Method according to claim 10 or 11, wherein said reticular structure (23) is manufactured by additive manufacturing.
